# EUROPÄISCHE PATENTSCHRIFT

(11) **EP 2 025 934 B1**
(45) Veröffentlichungstag und Bekanntmachung des Hinweises auf die Patenterteilung: **05.08.2009**
(21) Anmeldenummer: 07015520.5
(22) Anmeldetag: 07.08.2007
(51) Int. Cl.: F04B 23/02, F04B 23/04, F04B 53/08, F04B 17/03, F04C 11/00

(54) **Motorpumpenaggregat**
Motor pump unit
Assemblage de pompes et de moteurs

(43) Veröffentlichungstag der Anmeldung: 18.02.2009
(73) Patentinhaber: HAWE Hydraulik SE, 81673 München (DE)
(72) Erfinder: Neumair, Georg, 85402 Thalhausen (DE)
(74) Vertreter: Grünecker, Kinkeldey, Stockmair & Schwanhäusser Anwaltssozietät

(56) Entgegenhaltungen:
- EP-A- 0 962 654
- EP-A- 1 045 143
- DE-A1- 4 421 375
- DE-A1- 19 942 567

## Beschreibung

Die Erfindung betrifft ein Motorpumpenaggregat gemäß Oberbegriff des Patentanspruchs 1.

Es ist aus EP-A-1 045 143, auf welches der Oberbegriff von Patentanspruch 1 basiert, ein Motorpumpenaggregat mit einem das Reservoir definierenden Rippenrohr und einem Kühllüfter auf einem Deckel bekannt, in welchem ein Unteröl-Elektromotor mehrere Hydraulikpump-Stufen antreibt. Da der Antriebsmotor aufgrund der mehreren Pumpenstufen sich ändernden Lastverhältnissen ausgesetzt ist, wird er in seiner Leistungscharakteristik für die Maximallast oder eine bestimmte Teillast ausgelegt. Somit arbeitet er häufig mit schlechtem Wirkungsgrad und wird elektrische Primärenergie nicht effizient genutzt. In manchen Betriebsphasen kann unzweckmäßig viel Wärme abgegeben werden, die über das Öl abzuführen ist.

Weiterer Stand der Technik ist enthalten in: EP-A-0 962 654; DE-A-199 42 567; DE-A-44 21 375.

Der Erfindung liegt die Aufgabe zugrunde, ein Motorpumpenaggregat der eingangs genannten Art anzugeben, das elektrische Primärenergie effizienter nutzen lässt.

Die gestellte Aufgabe wird mit den Merkmalen des Patentanspruchs 1 gelöst.

Da im selben Ölreservoir zwei Unteröl-Elektromotoren angeordnet sind, deren jeder zumindest eine Hydraulikpumpe treibt, lässt sich jeder Motor in seiner Leistungscharakteristik optimieren, da er geringeren Laständerungen unterworfen wird. So kann beispielsweise der erste Motor permanent betrieben werden und seine Hydraulikpumpe eine bestimmte Förderleistung haben, während der zweite Motor die zweite Hydraulikpumpe unter ähnlichen Verhältnissen leistungsoptimiert antreibt, beispielsweise im Abschaltbetrieb und nur bei Bedarf aufgrund einer zusätzlichen Last. Dies führt insgesamt zur effizienteren Nutzung elektrischer Primärenergie, ermöglicht einfache und kostengünstige Motorkonzepte, und vermeidet Wärme aufgrund Betriebsphasen mit ungünstigem Wirkungsgrad. Dies wiederum reduziert den Kühlleistungsbedarf. Der Mehraufwand des zweiten, im selben Reservoir untergebrachten Motors kann durch die erzielbaren Vorteile weitestgehend kompensiert werden. Im Kern wird in einem Motorpumpenaggregat für variierende hydraulische Lasten einem ersten, permanent betriebenen Motor zum Decken einer sich nicht nennenswert ändernde hydraulischen Grundlast ein zweiter Motor für eine mindestens zweite Hydraulikpumpe zugeordnet, die eine Spitzenlast deckt, auf die die Leistungscharakteristik des zweiten Motors abgestimmt sein kann. So lassen sich der erste und der zweite Motor mit jeweils optimierter Leistungscharakteristik auslegen und betreiben. Das Motorpumpenaggregat ist speziell geeignet für Werkzeugmaschinen, die eine Arbeitshydraulik und/oder Hydroverbraucher aufweist und betriebsbedingt deutlich variierende hydraulische Lastverhältnisse für das ein Versorgungsaggregat darstellende Motorpumpenaggregat generiert. Dabei kann der Kühllüfter die in vermindertem Ausmaß entstehende Wärme allein oder zumindest assistierend abführen. Das Rippenrohr hat entweder Standardabmessungen oder ist auf die durch den zweiten Unteröl-Pumpenantriebsmotor vergrößerte Verdrängung abgestimmt dimensioniert.

Montagetechnisch günstig ist jeder Motor im Deckel an einem Stirnende statorseitig gehaltert und rotorseitig gelagert. Am anderen Stirnende ist über einen dazwischen angeordneten Lagerschild für die Rotorwelle zumindest eine frei auskragend abgestützte Hydraulikpumpe montiert, vorzugsweise eine Zahnradpumpe oder eine andere Konstantpumpe. Alternativ könnten Kolbenpumpenelemente am Motor oder im Reservoir montiert sein.

Um die Wärme gleichmäßig im Öl zu verteilen, und auch ähnliche Ansaug- und Rücklaufverhältnisse zu erzielen, sind die Motorachsen im Wesentlichen parallel zur Rippenrohrachse. Die eine Motorachse kann dabei in Querrichtung relativ zur anderen Motorachse versetzt sein, gegebenenfalls so weit, dass die von den Motoren auskragenden Hydraulikpumpen einander in Längsrichtung des Rippenrohres überlappen. Auf diese Weise wird der Unterbringungsraum im Reservoir optimal genutzt. Das Aggregat wird z.B. liegend eingesetzt.

Um für Ausführungsformen, die sich beispielsweise dadurch unterscheiden, dass der Kühllüfter entweder vom ersten Pumpen-Antriebsmotor direkt oder durch einen eigenen Elektromotor angetrieben wird, gleiche Teile verwenden zu können, ist der eine Deckel mit einem Einpresskragen für den Stator und einem Stützkragen für ein Rotorwellenlager versehen, wobei der Stützkragen in einem Zwischendeckel geformt sein kann, der bei eigenem Elektromotor für den Kühllüfter eingesetzt, hingegen bei einem Direktantrieb des Kühllüfters weggelassen wird.

Zweckmäßig bilden die Deckel mit den daran montierten Unteröl-Elektromotoren und gegebenenfalls den Hydraulikpumpen vorfertigbare Unterbaugruppen, die mit entsprechend dimensionierten Rippenrohren zu Motorpumpenaggregaten unterschiedlicher Fassungsvermögen baukastenartig kombiniert werden können. Dabei kann der Kühllüfter, mit oder ohne eigenem Antriebsmotor, bereits Teil einer Unterbaugruppe sein.

Anhand der Zeichnungen werden Ausführungsformen des Erfindungsgegenstandes erläutert. Es zeigen:
- Fig. 1: einen Längsschnitt einer ersten Ausführungsform eines Motorpumpenaggregats mit zwei in einem gemeinsamen Reservoir untergebrachten Unteröl-Elektromotoren, und
- Fig. 2: einen Längsschnitt einer abgeänderten Ausführungsform.

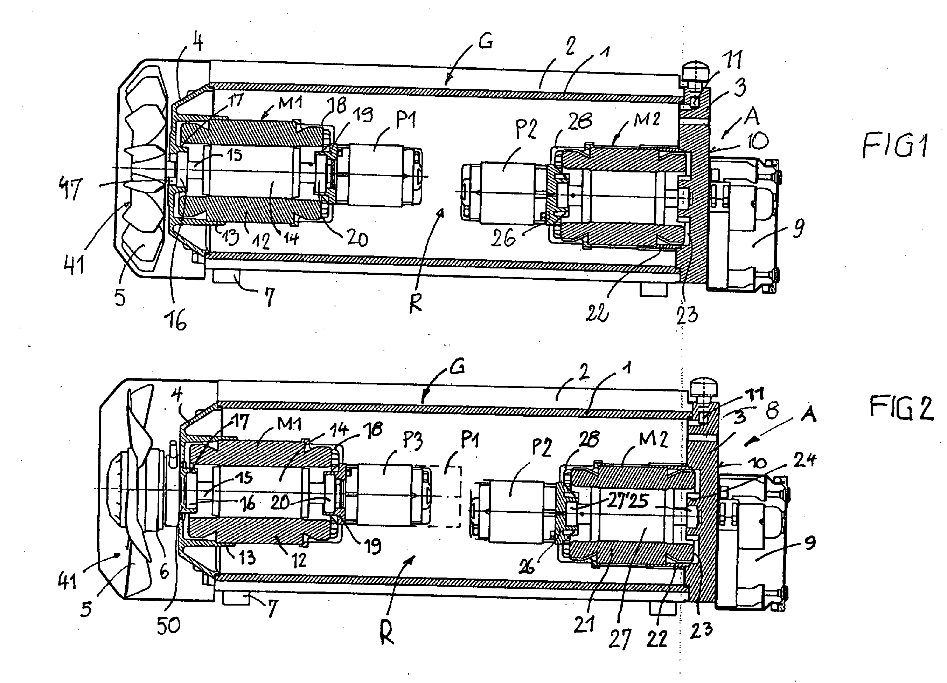

Ein in Fig. 1 im Längsschnitt gezeigtes Motorpumpenaggregat A weist in einem gemeinsamen, durch ein Rippenrohr 1 mit zumindest außenliegenden Kühlrippen 2 und beidendigen Deckeln 3, 4 definierten Reservoir R einen ersten Unteröl Elektromotor M1 und einen zweiten Unteröl-Elektromotor M2 auf, deren jeder eine Hydraulikpumpe P1, P2 treibt, beispielsweise eine Konstantpumpe, insbesondere Zahnradpumpe. Die Pumpenantriebsmotoren M1, M2 sind mit ihren Achsen annähernd parallel zur Rippenrohrachse angeordnet, und, vorzugsweise, quer dazu zueinander versetzt an dem jeweiligen Deckel 3, 4 montiert, derart, dass die Motoren M1, M2 mit den frei auskragenden Hydraulikpumpen P1, P2 zueinander weisen oder sich gegebenenfalls sogar seitlich überlappen.

Die ersten und zweiten Hydraulikpumpen P1, P2 können gleiche, ähnliche oder auch deutlich verschiedene Förderleistungen aufweisen. Die Motoren M1, M2 können, wie gezeigt, im Wesentlichen identisch oder (nicht gezeigt) verschieden groß oder unterschiedlich leistungsfähig sein. Ihre jeweilige Leistungscharakteristik ist z.B. im Hinblick auf die maximale Förderleistung der angetriebenen Hydraulikpumpe P1 oder P2 optimiert.

Der erste Unteröl-Elektromotor M1 ist mit einem Stator 12 in einem Stützkragen 13 des Deckels 4 durch Einpressen fixiert. Eine Rotorwelle 15 eines Rotors 14 ist in Lagern 16, 20 in einem Stützkragen 17 des Deckels 4 bzw. in einem Lagerschild 19 gelagert. Die Rotorwelle 15 ist durch eine Durchgangsöffnung 47 des Deckels 4 direkt mit einem Lüfterrad 5 eines Kühllüfters 41 gekoppelt. Der erste Unteröl-Elektromotor M1 wird z.B. permanent betrieben. Die erste Hydraulikpumpe P1 ist mit einer Befestigungseinrichtung 18 am Stirnende des Stators 12 fixiert, und zwar unter Zwischenschaltung des Lagerschilds 19. Im Bereich des Rotorwellenlagers 16 ist eine Abdichtung nach außen (nicht gezeigt) vorgesehen.

Der zweite Unteröl-Elektromotor M2 ist statorseitig in einer ringförmigen Vertiefung 23 des dick ausgebildeten Deckels 3 mittels eines Hülsenkörpers 22 gehaltert. Die zweite Hydraulikpumpe P2 ist mit einer Befestigungseinrichtung 28 zusammen mit einem Lagerschild 26 am anderen Stirnende des Unteröl-Pumpenantriebsmotors M2 festgelegt. Im Deckel 3 sind hydraulische Wege bzw. Kanäle (nicht im Detail dargestellt) vorgesehen, die beispielsweise zu einer Montierfläche 10 für Steuer-, Überwachungs- und Regelorgane 9 des Motorpumpenaggregats A führen. Ferner können oberseitig eine Entlüftung 11 und unterseitig Standfüße 7 vorgesehen sein.

In der Ausführungsform in Fig. 2 ist die Durchgangsöffnung 47 des Deckels 4 durch einen Zwischendeckel 50 verschlossen, in dem das Rotorwellenlager 16 gehaltert ist. Das Lüfterrad 5 des Kühllüfters 41 besitzt einen eigenen elektrischen Antriebsmotor 6, der auf dem Deckel 4 montiert ist und, vorzugsweise, mit einer höheren Drehzahl läuft als der Drehzahl des ersten Unteröl-Elektromotors M1.

Der erste Unteröl-Elektromotor M1 treibt in Fig. 2 nicht nur die erste Konstantpumpe P1, sondern auch eine dritte Konstantpumpe P3. Die Konstantpumpen P1, P3 unterscheiden sich beispielsweise in ihren Förderleistungen. Zweckmäßig handelt es sich um Zahnradpumpen. Der Lüfterrad-Antriebsmotor 6 kann entweder im Dauerbetrieb laufen, oder temperaturabhängig bedarfsweise zugeschaltet werden.

Die dritte Hydraulikpumpe P3 (siehe Fig. 2) ist beispielsweise an einen nicht gezeigten Ölkühler außerhalb des Reservoirs R angeschlossen.

Der zweite Unteröl-Elektromotor P2 wird entweder im Abschaltbetrieb oder permanent betrieben. Im Abschaltbetrieb richtet sich die Einschaltzeit des zweiten Motors M2 nach der jeweiligen hydraulischen Spitzenlast und dem Erfordernis einer Kühlung des Öls, d.h., der zweite Motor M2 kann abgeschaltet bleiben, wenn weder eine Spitzenlast angefordert wird, die die erste Hydraulikpumpe P1 nicht zu decken vermag, noch eine Kühlung erforderlich ist. Bei Dauerbetrieb des zweiten Motors M2 wird bei Bedarf die Spitzenlast gedeckt, und ohne Spitzenlast die Abgabe der zweiten Konstantpumpe P2 permanent durch einen Ölkühler geführt.

Das Rippenrohr 1 und gegebenenfalls der Deckel 4 bestehen aus Leichtmetall oder einer Leichtmetalllegierung. Das Rippenrohr 1 ist zweckmäßig ein entsprechend abgelängter Abschnitt eines endlos extrudierten Rippenrohrprofils. Der Deckel 3 besteht zweckmäßig aus Stahl, könnte jedoch alternativ aus einer Leichtmetalllegierung bestehen. Die Deckel 3, 4 sind durch nicht dargestellte Spannschrauben am Rippenrohr 1 festgelegt, wobei nicht gezeigte Dichtelemente zur Abdichtung des Reservoirs R nach außen dienen.

Das Motorpumpenaggregat A ist beispielsweise zweckmäßig für eine Werkzeugmaschine mit einer Arbeitshydraulik und/oder Hydroverbrauchem, die permanent eine relativ konstante Grundlast, beispielsweise um Leckverluste auszugleichen, und die nur fallweise eine hydraulische Spitzenlast benötigen. Die ersten und zweiten Hydraulikpumpen P1, P2 sind hierfür an einen gemeinsamen Kreis angeschlossen. Die in Fig. 2 gezeigte, dritte Konstantpumpe P3 kann beispielsweise permanenten oder zeitweise einen Ölkühler speisen. Der erste Motor M1 treibt permanent die erste Konstantpumpe P1 (für die hydraulische Grundlast) und gegebenenfalls die dritte Konstantpumpe P3 (für die im Wesentlichen konstante Kühllast). Der zweite Motor M2 wird im Abschaltbetrieb nur dann eingeschaltet (druckabhängig oder durch eine Programmsteuerung der Werkzeugmaschine), wenn die hydraulische Spitzenlast zu decken ist.

## Patentansprüche

1. Motorpumpenaggregat (A), mit einem beidendig durch Deckel (3, 4) verschlossenen Rippenrohr (1), das ein Ölreservoir (R) und einen Aufnahmeraum für zumindest zwei Hydraulikpumpen (P1, P2, P3) und mindestens einen Unteröl-Elektromotor (M1, M2) definiert und zumindest einen auf einem Deckel (3, 4) montierten Kühllüfter (41) aufweist, **dadurch gekennzeichnet, dass** im selben Ölreservoir (R) zwei Unteröl-Elektromotoren (M1, M2) voneinander getrennt an den Deckeln (3, 4) montiert sind, von denen jeder mit zumindest einer Hydraulikpumpe (P1, P2, P3) in Antriebsverbindung steht.

2. Motorpumpenaggregat nach Anspruch 1, **dadurch gekennzeichnet, dass** der Unteröl-Elektromotor (M1, M2) im Deckel (3, 4) an einem Stirnende statorseitig gehaltert und rotorseitig gelagert ist, und am anderen Stirnende über einen dazwischen angeordneten Lagerschild (19, 26) statorseitig zumindest eine frei auskragend abgestützte Hydraulikpumpe (P1, P2, P3) trägt, vorzugsweise eine Zahnradpumpe.

3. Motorpumpenaggregat nach Anspruch 1, **dadurch gekennzeichnet, dass** die Motorachsen zur Rippenrohrachse im Wesentlichen parallel, jedoch quer zur Rippenrohrachse zueinander versetzt sind.

4. Motorpumpenaggregat gemäß Anspruch 1, **dadurch gekennzeichnet, dass** der eine Deckel (4) einen äußeren Stützkragen (13) für den Stator (12) des ersten Elektromotors (M1) und einen inneren Stützkragen (17) für ein Rotorwellenlager (16) aufweist, vorzugsweise einen Stützkragen (17) an einem Zwischendeckel (50), mit dem wahlweise eine Durchtrittsöffnung (47) des Deckels (4) verschließbar ist.

5. Motorpumpenaggregat nach Anspruch 4, **dadurch gekennzeichnet, dass** der Kühllüfter (41) auf dem Deckel (4) montiert und entweder über die durch die Durchtrittsöffnung (47) durchgeführte Rotorwelle (15) des ersten, permanent betriebenen Elektromotors (M1) oder bei eingesetztem Zwischendeckel (50) durch einen eigenen Elektromotor (6) antreibbar ist.

6. Motorpumpenaggregat nach wenigstens einem der vorhergehenden Ansprüche, **dadurch gekennzeichnet, dass** der jeweilige Deckel (3, 4) mit dem ersten bzw. zweiten Elektromotor (M1, M2) und den Hydraulikpumpen (P1, P2, P3) vorfertigbare Unterbaugruppen des Motorpumpenaggregats (A) sind.

## Claims

1. Motor pump aggregate (A), comprising a ribbed tube (1) closed at both ends by cover lids (3, 4), the ribbed tube (1) defining an oil reservoir (R) and an accommodation space for at least two hydraulic pumps (P1, P2, P3) and at least one submersible electromotor (M1, M2), and at least one cooling fan (41) mounted at one of the cover lids (3, 4) **characterised in that** two submersible electromotors (M1, M2) are mounted separated from each other at the cover lids (3, 4), each of the electromotors (M1, M2) being in driving connection with at least one hydraulic pump (P1, P2, P3).

2. Motor pump aggregate according to claim 1, **characterised in that** the submersible electromotor (M1, M2) is held at one front end at the stator side in the cover lid (3, 4) and is additionally supported at the side of a rotor, and that the submersible electric motor carries at least one freely cantilevered and supported hydraulic pump (P1, P2, P3), at the other stator side front end via an intermediate end plate (19, 26), preferably a gear pump.

3. Motor pump aggregate according to claim 1, **characterised in that** both motor axes are substantially parallel to the axis of the ribbed tube but are offset in relation to each other crosswise to the axis of the ribbed tube.

4. Motor pump aggregate according to claim 1, **characterised in that** one cover lid (4) is provided with an external supporting collar (13) for the stator (12) and with an internal support collar (17) for a rotor shaft bearing (16) for a first electromotor (M), preferably is provided with the support collar (17) at an intermediate cover lid (50) provided for selectively closing a through-opening (47) of the cover lid (4).

5. Motor pump aggregate according to claim 4, **characterised in that** the cooling fan (41) is mounted at the one cover lid (4) and is driven either by the rotor shaft (15) of the first, permanently driven electromotor (M1) penetrating through the through-opening (47) or is driven by its own electromotor (6) in the case that the intermediate cover lid (50) is inserted.

6. Motor pump aggregate according to at least one of the preceding claims, **characterised in that** the respective cover lid (3, 4) equipped with the first or the second electromotor (M1, M2) and the hydraulic pumps (P1, P2, P3) are prefabricated sub-structure groups of the motor pump aggregate (A).

## Revendications

1. Groupe motopompe (A) comprenant un tube à ailettes (1) fermé aux deux extrémités par des couvercles (3, 4), lequel tube définit un réservoir d'huile (R) et un espace de réception pour au moins deux pompes hydrauliques (P1, P2, P3) et au moins un moteur électrique (M1, M2) immergé dans de l'huile et présente au moins un ventilateur de refroidissement (41) monté sur un couvercle (3, 4), **caractérisé en ce que** deux moteurs électriques (M1, M2) immergés dans de l'huile sont montés sur les couvercles (3, 4) dans le même réservoir d'huile (R) séparément l'un de l'autre, chacun desquels est en liaison d'entraînement avec au moins une pompe hydraulique (P1, P2, P3).

2. Groupe motopompe suivant la revendication 1, **caractérisé en ce que** le moteur électrique immergé (M1, M2) dans l'huile est fixé du côté stator et monté du côté rotor dans le couvercle (3, 4) à une extrémité frontale, et à l'autre extrémité frontale supporte du côté stator par l'intermédiaire d'une flasque intermédiaire (19, 26) au moins une pompe hydraulique (P1, P2, P3) supportée librement en porte-à-faux, de préférence une pompe à roues dentées.

3. Groupe motopompe suivant la revendication 1, **caractérisé en ce que** les axes des moteurs sont essentiellement parallèles à l'axe du tube à ailettes, mais sont mutuellement décalés transversalement à cet axe.

4. Groupe motopompe suivant la revendication 1, **caractérisé en ce que** l'un des couvercles (4) présente un collet d'appui extérieur (13) pour le stator (12) du premier moteur électrique (M1) et un collet d'appui intérieur (17) pour un palier d'arbre de rotor (16), de préférence un collet d'appui (17) sur un couvercle intermédiaire (50), par lequel peut être fermée sélectivement une ouverture de passage (47) du couvercle (4).

5. Groupe motopompe suivant la revendication 4, **caractérisé en ce que** le ventilateur de refroidissement (41) est monté sur le couvercle (4) et peut être entraîné soit par l'intermédiaire de l'arbre de rotor (15), guidé au travers de l'ouverture de passage (47), du premier moteur électrique (M1) à entraînement permanent, soit par un moteur électrique propre (6) en position de mise en place du couvercle intermédiaire (50).

6. Groupe motopompe suivant l'une au moins des revendications précédentes, **caractérisé en ce que** les couvercles respectifs (3, 4) sont des sous-groupes du groupe motopompe (A), préfabricables avec le premier et/ou le second moteur électrique (M1, M2) et les pompes hydrauliques (P1, P2, P3).
